# EUROPEAN PATENT APPLICATION

(11) **EP 4 811 542 A1**
(43) Date of publication of application: **23.09.2026**
(21) Application number: 23958911.2
(22) Date of filing: 17.11.2023
(51) Int. Cl.: H01Q 1/22

(54) **ELECTRONIC DEVICE**

(71) Applicant: Nintendo Co., Ltd., Kyoto 601-8501 (JP)
(72) Inventor: HIROSE, Shinji, Kyoto-shi, Kyoto 601-8501 (JP)
(74) Representative: Bardehle Pagenberg Partnerschaft mbB Patentanwälte Rechtsanwälte
(86) International application number: PCT/JP2023/041459
(87) International publication number: WO 2025/104911

(57) **Abstract**

To provide electronic device capable of suppressing reduction in available space caused by arrangement of cable connecting antenna and board. Electronic device according to aspect of present disclosure includes antenna, controller configured to control antenna, cable connecting antenna and controller, battery pack including battery, protection circuit electrically connected to battery, and first cover covering battery and protection circuit, and second cover overlapping at least protection circuit in battery pack as viewed in thickness direction of battery pack. Protection circuit is shorter than battery in thickness direction. Second cover has, on surface of second cover opposite to battery pack in thickness direction, groove recessed in thickness direction at position overlapping protection circuit as viewed in thickness direction. Cable is partially received in groove.

## Description

### TECHNICAL FIELD

The present disclosure relates to an electronic device including an antenna.

### BACKGROUND ART

Patent Literature 1 describes an electronic device including an antenna. The electronic device described in Patent Literature 1 includes the antenna, a board, and a battery pack in a casing. The antenna and the board are connected with a cable.

### PRIOR ART DOCUMENTS

### PATENT LITERATURE

Patent Literature 1: WO 2016/125723

### SUMMARY OF THE INVENTION

### PROBLEMS TO BE SOLVED BY THE INVENTION

The electronic device described in Patent Literature 1 includes the battery pack between the antenna and the board. The cable connects the antenna and the board while bypassing the battery pack. In this case, the cable bypassing the battery pack occupies part of the space in the casing. This reduces the space for components in the casing.

In response to the above issue, one or more aspects of the present disclosure are directed to an electronic device capable of suppressing a reduction in available space caused by arrangement of a cable connecting an antenna and a board.

### SOLUTIONS TO THE PROBLEMS

In response to the above, an electronic device according to one or more aspects of the present disclosure may have one of the structures according to (1) to (13) below.
(1) An electronic device according to an aspect of the present disclosure includes
   an antenna,
   a controller configured to control the antenna,
   a cable connecting the antenna and the controller,
   a battery pack including a battery, a protection circuit electrically connected to the battery, and a first cover covering the battery and the protection circuit, and
   a second cover overlapping at least the protection circuit in the battery pack as viewed in a thickness direction of the battery pack,
   wherein the protection circuit is shorter than the battery in the thickness direction,
   the second cover has, on a surface of the second cover opposite to the battery pack in the thickness direction, a groove recessed in the thickness direction at a position overlapping the protection circuit as viewed in the thickness direction, and
   the cable is partially received in the groove.

In the structure (1), the cable is partially received in the groove overlapping the protection circuit in the thickness direction. This reduces a size increase in the thickness direction of the electronic device. The electronic device can include a larger empty space as viewed in the thickness direction than a structure in which the cable is partially received in a portion other than the groove. The cable is positioned by the groove.

(2) In the structure according to (1),
the second cover may overlap the battery and the protection circuit as viewed in the thickness direction, and may comprise a metal.

The protection circuit is less susceptible to changes in the thickness than a battery. The electronic device has a thickness set to accommodate such changes in the thickness of the battery or the protection circuit. The electronic device including the groove that overlaps the battery as viewed in the X-direction may be thicker by the size of the groove. In the structure (2), the groove does not overlap the battery in the thickness direction and overlaps the protection circuit that is less susceptible to changes in the thickness than a battery. The electronic device is thus thinner than the structure having the groove overlapping the battery as viewed in the thickness direction.

In the structure (2), the second cover overlaps the battery as viewed in the thickness direction and is formed from a metal. The second cover can thus dissipate the heat generated by the battery.

(3) In the structure according to (2),
the second cover may be electrically connected to a ground electrode included in the electronic device.

In the structure (3), the second cover connected to the ground electrode serves as a shield member shielding electromagnetic waves. The cable located in the groove can thus be less susceptible to electromagnetic waves.

(4) In the structure according to any one of (1) to (3),
the groove may have a depth in the thickness direction greater than or equal to a length of the cable in the groove in the thickness direction.

When the depth of the groove in the thickness direction is less than the length of the cable in the groove in the thickness direction, the cable is partially located outside the groove. In this case, the electronic device can be thicker. In the structure (4), however, the depth of the groove in the thickness direction is greater than or equal to the length of the cable in the groove in the thickness direction. The cable is thus entirely received in the groove. This reduces a size increase in the thickness of the electronic device.

In the structure including the second cover connected to the ground electrode, the cable entirely received in the groove is less susceptible to electromagnetic waves than the cable partially located outside the groove.

(5) In the structure according to any one of (1) to (4),
a surface defining the groove may be smoothly curved.

A groove defined by a bent surface may crack in the bent portion. In the structure (5), the groove is defined by a smoothly curved surface. The structure (5) is thus less likely to crack than a structure with a groove defined by a bent surface.

(6) In the structure according to (5),
the cable may be a coaxial cable having a circular cross section, and
the surface defining the groove may be curved, at a deeper portion of the groove, with a curvature that may be the same as or substantially the same as the circular cross-section of the coaxial cable.

In the structure (6), the surface defining the groove defines the deeper portion of the groove and has the same or substantially the same curvature as the circular cross section of the cable that is a coaxial cable. The outer surface of the cable faces the surface defining the groove at a substantially uniform distance in the radial direction of the cross section of the cable. This structure can reduce the fluctuations in a current flowing through the cable caused by external factors. The antenna connected to the cable is thus less likely to have unintended characteristic changes.

(7) In the structure according to any one of (1) to (6),
the electronic device may further include a retaining portion configured to fix a wiring position of the cable,
wherein the cable may include
   a first portion located between the antenna and the groove,
   a second portion located in the groove, and
   a third portion located between the groove and the controller, and wherein
the retaining portion may fix the wiring position of the cable at least one of the first portion or the third portion.

In the structure (7), the retaining portion reduces misalignment of the cable in at least one of the first portion or the third portion. However, the second portion of the cable received in the groove without the retaining portion is less likely to be misaligned. The electronic device can thus have a simpler structure with no retaining portions for the second portion.

(8) In the structure according to any one of (1) to (7),
the battery pack may be rectangular as viewed in the thickness direction, and
the groove may extend from one of two long sides of a rectangle of the battery pack to another one of the two long sides.

The groove can be shorter in the structure (8) than in a structure having a groove extending from one short side to the other short side of the rectangular battery pack.

(9) In the structure according to (8),
the electronic device may include a connector connected to the cable and electrically connected to the controller,
wherein the battery pack may be located between the antenna and the connector in a direction along a short side of the rectangle.

In the structure (9), the battery pack is located between the antenna and the connector in the direction along a short side of the rectangular battery pack. The cable connecting the antenna and the controller can thus be shorter than a cable in a structure including the battery pack located between the antenna and the connector in a direction along a long side of the rectangular battery pack.

(10) In the structure according to (8) or (9),
the electronic device may include an electronic component provided alongside the battery pack in a direction along a long side of the rectangle,
wherein, in the direction along the long side of the rectangle, the groove is located on an opposite side of a central position of the battery pack from the electronic component.

In the structure (10), the groove and the electronic component is located on opposite sides of a center of the battery pack in the direction along a long side of the rectangular battery pack. More specifically, the cable received in the groove is located away from the electronic component. This structure can reduce electrical interference between the electronic component and the cable in the groove.

(11) In the structure according to any one of (8) to (10),
the groove may be parallel to or substantially parallel to a short side of the rectangle.

In the structure (11), the groove is parallel to or substantially parallel to a short side of the rectangular battery pack. The groove on the second cover can thus be shorter.

(12) In the structure according to any one of (1) to (11),
the electronic device may include a rib located in a same direction as the battery pack with respect to the second cover in the thickness direction, the rib extending parallel to or substantially parallel to the groove,
wherein the groove may be a curved portion of the second cover curved toward the battery pack in the thickness direction, and
the rib may face the curved portion in a direction perpendicular to the thickness direction and a direction in which the rib extends and may be in contact with the curved portion.

In the structure (12), the rib can position the second cover in the direction perpendicular to the thickness direction and the direction in which the rib extends.

(13) In the structure according to any one of (1) to (12),
the electronic device may include
   a wall facing the second cover in the thickness direction and located on a side of the second cover opposite to the battery pack,
wherein a distance, in the thickness direction, between the wall and a portion of the second cover other than the groove may be shorter than a length, in the thickness direction, of the cable received in the groove.

In the structure (13), the distance, in the thickness direction, between the wall and the portion of the second cover other than the groove is shorter than the length, in the thickness direction, of the cable in the groove. The wall can thus restrict the cable from slipping off the groove.

### EFFECTS OF THE INVENTION

The electronic device according to the above aspects of the present disclosure is capable of suppressing a reduction in available space caused by arrangement of a cable connecting an antenna and a board.

### BRIEF DESCRIPTION OF THE DRAWINGS

Fig. 1 is a schematic front view of an electronic device according to an embodiment of the present disclosure.
Fig. 2 is a schematic rear view of the electronic device according to the embodiment of the present disclosure, showing the inside of the electronic device without a part of a housing.
Fig. 3 is a sectional view taken along line III-III in Fig. 2.
Fig. 4 is a sectional view of an electronic device according to a modification, corresponding to the sectional view taken along line III-III in Fig. 2.

### DETAILED DESCRIPTION

Embodiments of the present invention will be described below with reference to the drawings. The present invention is not limited to these embodiments. In the drawings, like reference numerals denote substantially the same components.

For ease of explanation, directional terms such as up, down, and height are used herein to describe the components in typical use. These terms are not intended to limit the use or other situations of an electronic device according to one or more embodiments of the present invention.

### (Embodiments)

The structure of an electronic device according to an embodiment of the present disclosure will be described. The electronic device according to the embodiment of the present disclosure is, for example, a gaming device, a smartphone, or a personal computer. In the example described below, the electronic device is, for example, a gaming device.

The electronic device is a substantially rectangular prism and includes a display. In particular, the electronic device in the present embodiment is a portable device that is placed on a mount surface, such as a floor or a desktop, or held by a user for use. The electronic device may have features other than gaming. For example, the electronic device may be a personal computer (PC) that can execute games, such as a portable gaming PC. The gaming process may be performed on a console or a cloud server separate from the electronic device, rather than being performed on the electronic device. In this case, for example, the electronic device displays, on its display, images or videos generated through the process performed on the separate console or cloud server.

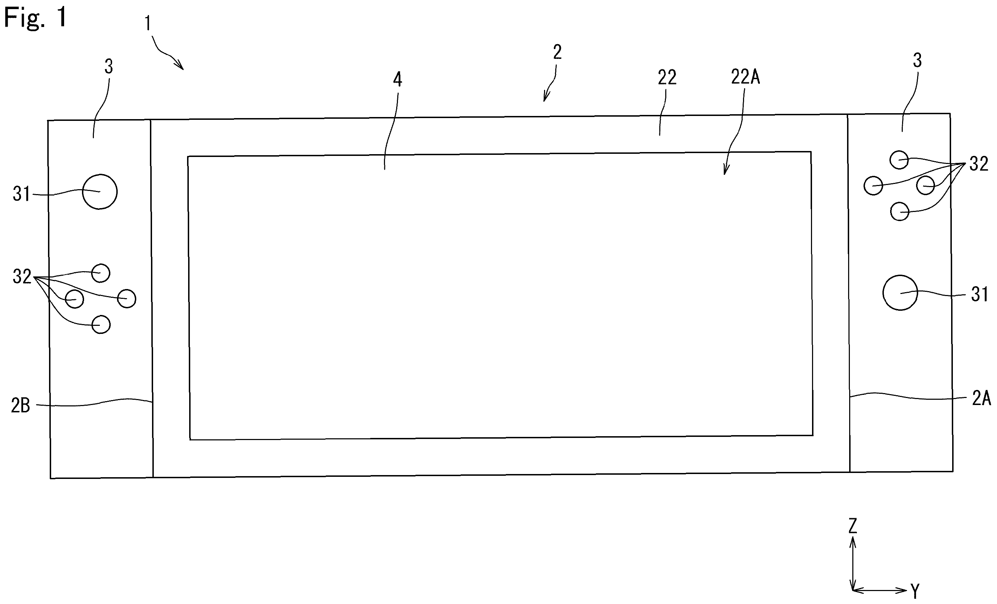

Fig. 1 is a schematic front view of the electronic device according to the embodiment of the present disclosure. As shown in Fig. 1, an electronic device 1 includes a housing 2 and two controllers 3.

For ease of explanation, the electronic device 1 has a thickness direction referred to as the X-direction, a width direction as the Y-direction, and a height direction as the Z-direction herein and in the drawings. The X-direction, the Y-direction, and the Z-direction are perpendicular to one another.

The two controllers 3 shown in Fig. 1 are used to operate the electronic device 1. A single user may play a game on the electronic device 1 using at least one of the two controllers 3. Two users may play a game on the electronic device 1, with one user using one of the two controllers 3 and the other user using the other of the two controllers 3. Another controller other than the two controllers 3 may be used to operate the electronic device 1. In this case, three or more users can play a game on the electronic device 1. For example, three users may play a game on the electronic device 1, with a first user using one of the two controllers 3, a second user using the other of the two controllers 3, and a third user using the other controller. The two controllers 3 and the other controller may allow a remote operation of the electronic device 1 through a network such as the Internet. In this case, multiple users at different locations can play the game on the electronic device 1.

Each of the two controllers 3 includes, for example, a stick 31 and operation buttons 32 used for operations. Each of the two controllers 3 is attachable to and detachable from the housing 2. One of the two controllers 3 is attachable to and detachable from a side surface 2A of the housing 2 located in one of the two opposite directions aligned with the Y-direction. The other of the two controllers 3 is attachable to and detachable from a side surface 2B of the housing 2 located in the other of the two opposite directions aligned with the Y-direction. The two controllers 3 may be attached to or detached from the housing 2 in any known manner, such as fitting, sliding, or with magnets. The electronic device 1 may include a single controller 3 alone or no controller 3.

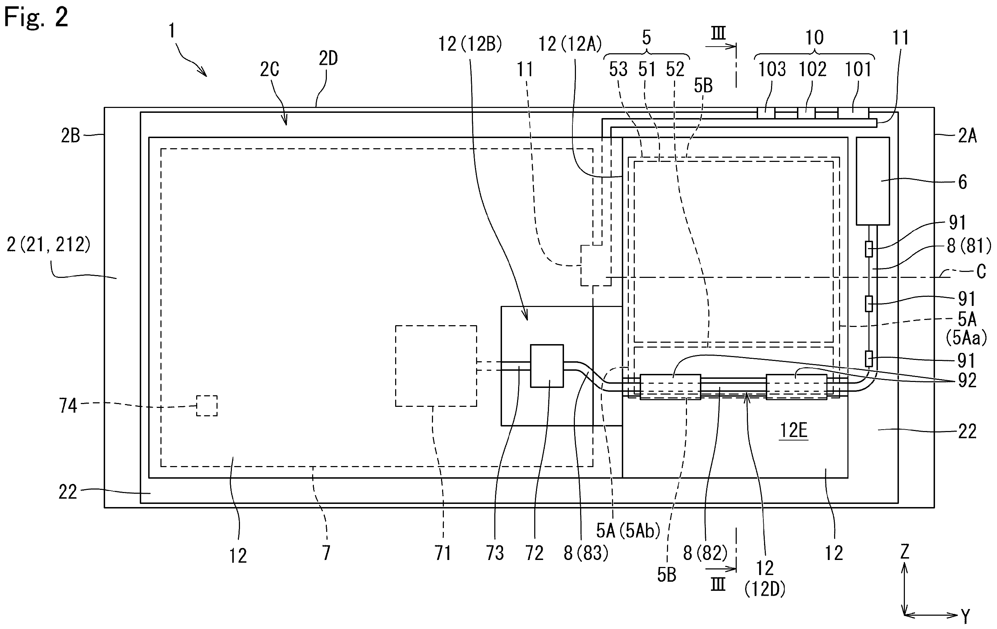

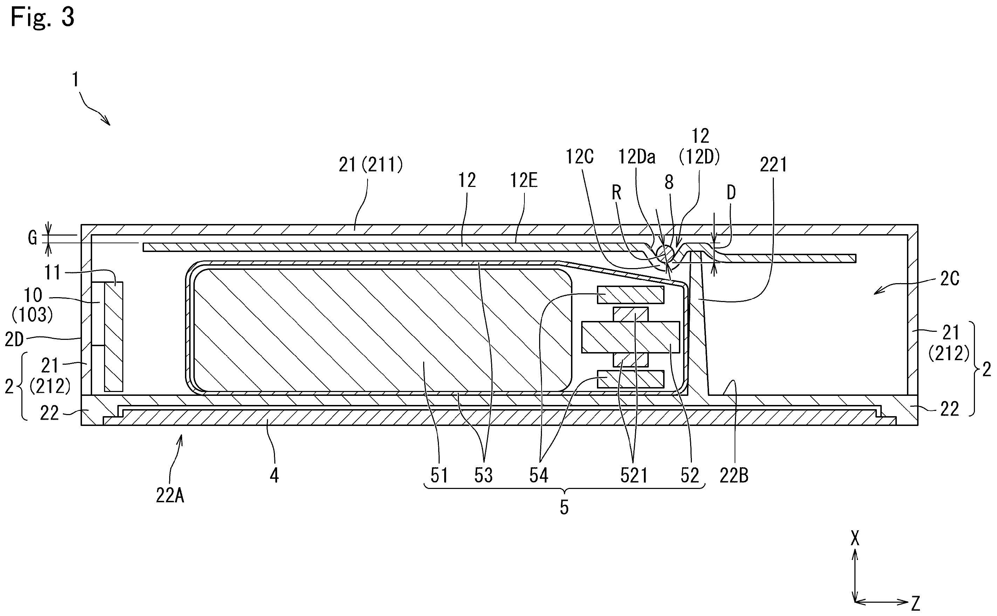

Fig. 2 is a schematic rear view of the electronic device according to the embodiment of the present disclosure, showing the inside of the electronic device without a part of a housing. Fig. 3 is a sectional view taken along line **III-III** in Fig. 2.

As shown in Figs. 2 and 3, the housing 2 is a substantially rectangular prism with an internal space 2C. The housing 2 includes a first housing 21 (lower housing) and a second housing 22 (upper housing). The housing 2 includes the first housing 21 and the second housing 22 combined together. The housing 2 may be an integrally molded single member or a combination of three or more members.

The first housing 21 includes a main wall 211 and side walls 212. The main wall 211 is an example of a wall. The main wall 211 is the part of the housing 2 not shown in Fig. 2. The main wall 211 is a plate wall extending in the Y-direction and the Z-direction. The main wall 211 is thick in the X-direction. The side walls 212 extend in the X-direction from the main wall 211 along the entire periphery of the outer edge of the main wall 211 as viewed in the X-direction. The first housing 21 is a box with an opening in the X-direction.

As shown in Fig. 3, the second housing 22 is connected to the side walls 212 of the first housing 21 in a known manner such as fitting or screwing. The second housing 22 has a recess 22A in a portion other than the outer edge as viewed in the X-direction. The recess 22A in the second housing 22 receives a display 4. The display 4 is exposed outside the housing 2. This allows, for example, images and videos appearing on the display 4 to be viewable from outside the electronic device 1. The electronic device 1 may allow, for example, images and videos to appear on an external display such as a television. In this case, for example, the electronic device 1 includes a high-definition multimedia interface (HDMI, registered trademark) terminal. The electronic device 1 is connected to the external display with an HDMI cable.

A space surrounded by the housing 2 and the display 4 having the above structure is the internal space 2C in the housing 2.

As shown in Figs. 2 and 3, the housing 2 contains a battery pack 5, an antenna 6, a board 7, and a cable 8 in the internal space 2C.

As shown in Figs. 2 and 3, the battery pack 5 includes a battery 51, a protection circuit 52, a first cover 53, and cushions 54.

The battery 51 is a chargeable and dischargeable battery, such as a lithium-ion battery.

The protection circuit 52 is a circuit with a known structure for preventing, for example, overdischarge, overcharge, and overcurrent of the battery 51. In the present embodiment, the protection circuit 52 is a board on which various mount components 521 are mounted. The protection circuit 52 is located near the battery 51. The protection circuit 52 is electrically connected to the battery 51 and the board 7. The protection circuit 52 is shorter than the battery 51 in the X-direction, which is a thickness direction of the battery pack 5. In other words, the protection circuit 52 is thinner than the battery 51.

The cushions 54 are located with the protection circuit 52 between them in the X-direction. Each cushion 54 is a soft member such as a sponge to protect the protection circuit 52 from external impacts. The first cover 53 covers the battery 51, the protection circuit 52, and the cushions 54. In the present embodiment, the first cover 53 is a film member.

As shown in Fig. 2, the antenna 6 is a known member that transmits and receives radio waves. For example, the antenna 6 is used for communication such as Bluetooth (registered trademark) or a wireless local area network (LAN).

The board 7 includes a base formed from an insulator such as glass epoxy or ceramic, a wiring pattern and an electrode pattern of a conductor on at least one of the surface or the inside of the base, and multiple mount components mounted on the surface of the base.

In Fig. 2, the mount components are a controller 71 and a connector 72. Other mount components are not shown. In the present embodiment, the controller 71 is an integrated circuit (IC) and controls the operation of the electronic device 1 including the antenna 6.

In Fig. 2, the wiring pattern is a wiring pattern 73 electrically connecting the controller 71 and the connector 72. Other wiring patterns are not shown.

In Fig. 2, the electrode pattern is a ground electrode 74 connected to the ground of the electronic device 1. Other electrode patterns are not shown. Examples of other electrode patterns include a ground pattern. The ground pattern is a fully coated portion other than the wiring patterns on at least one of the surface or the inside of the base. The ground pattern serves as the ground of the electronic device 1. The ground electrode 74 is electrically connected to or is a part of the ground pattern. The ground electrode 74 may be located on a component other than the board 7. For example, the second housing 22 described above may be the ground electrode.

As shown in Fig. 2, the battery pack 5 is rectangular as viewed in the X-direction. The rectangular battery pack 5 has long sides 5A and short sides 5B as viewed in the X-direction. In the present embodiment, the long sides 5A extend in the Z-direction, and the short sides 5B extend in the Y-direction.

The cable 8 connects the antenna 6 and the connector 72. The cable 8 has one end connected to the antenna 6. The cable 8 has the other end connected to the connector 72. As described above, the connector 72 is electrically connected to the controller 71 with the wiring pattern 73. The cable 8 thus connects the antenna 6 and the controller 71.

As shown in Fig. 3, the cable 8 is a coaxial cable with a circular cross section. The cable 8 may have a cross section other than a circular cross section. The cable 8 is not limited to a coaxial cable.

As shown in Fig. 2, the antenna 6 is located, with respect to the battery pack 5, in one of the two opposite directions aligned with the Y-direction, and the connector 72 is located in the other of the two opposite directions with respect to the battery pack 5. More specifically, the battery pack 5 is located between the antenna 6 and the connector 72 in a direction along a short side 5B of the rectangular battery pack 5 (Y-direction in the present embodiment).

The cable 8 extends from the antenna 6 to the connector 72 over the battery pack 5. The wiring route for the cable 8 extending from the antenna 6 to the connector 72 will be described later.

As shown in Figs. 2 and 3, the housing 2 contains operation buttons 10 and a flexible printed circuit (FPC) 11 in the internal space 2C.

The operation buttons 10 are pressed by the user to operate the electronic device 1. The operation buttons 10 are adjacent to the battery pack 5 in a direction along a long side 5A of the rectangular battery pack 5 (the Z-direction in the present embodiment). Each operation button 10 is an example of an electronic component. The electronic component adjacent to the battery pack 5 in the Z-direction is not limited to the operation button 10 and may be, for example, an optical sensor.

In the present embodiment, the operation buttons 10 include a power button 101 and volume buttons 102 and 103. The power button 101 and the volume buttons 102 and 103 are electrically connected to the board 7 with the FPC 11.

The power button 101 and the volume buttons 102 and 103 are exposed outside the electronic device 1 through openings in a side surface 2D of the housing 2 facing in the Z-direction. This allows the power button 101 and the volume buttons 102 and 103 to be pressed by the user.

The electronic device 1 in a power-off state is activated when the power button 101 is pressed. The electronic device 1 in a power-on state is shut down when the power button 101 is pressed.

When the volume button 102 is pressed, the volume of sound output from a speaker (not shown) incorporated in the electronic device 1 is decreased. When the volume button 103 is pressed, the volume of sound output from the speaker is increased.

As shown in Figs. 2 and 3, the housing 2 contains a second cover 12 in the internal space 2C. The second cover 12 serves as a shield for reducing noise generated from the components located in the housing 2 (e.g., the mount components mounted on the board 7) or the effects of external noise on the components located in the housing 2.

As shown in Fig. 2, the second cover 12 overlaps the battery pack 5 and the board 7 as viewed in the X-direction. As shown in Fig. 3, the battery pack 5 and the board 7 are held between the second cover 12 and the second housing 22 in the X-direction. In other words, the second housing 22 is located in the same direction as the battery pack 5 with respect to the second cover 12 in the X-direction.

The second cover 12 is located closer to the main wall 211 than the battery pack 5 and the board 7 are in the X-direction. The second cover 12 is located between the main wall 211 and the battery pack 5 and between the main wall 211 and the board 7 in the X-direction. In other words, the main wall 211 is located opposite to the battery pack 5 in the X-direction with the second cover 12 being between the main wall 211 and the battery pack 5. The second cover 12 and the main wall 211 face each other in the X-direction.

The second housing 22 is located closer to the display 4 than the battery pack 5 and the board 7 are in the X-direction. The second housing 22 is located between the display 4 and the battery pack 5 in the X-direction.

The second cover 12 may overlap the protection circuit 52 in the battery pack 5 as viewed in the X-direction, which is the thickness direction of the battery pack 5. For example, the second cover 12 may not overlap the battery 51 as viewed in the X-direction.

The second cover 12 and the second housing 22 are formed from a metal. The second cover 12 and the second housing 22 may be formed from a material other than a metal, or for example, a resin.

The second cover 12 is electrically connected to the ground electrode 74. For example, the second cover 12 and the ground electrode 74 are connected to each other with a conductor cable.

As shown in Fig. 2, the portion of the second cover 12 overlapping the battery pack 5 as viewed in the X-direction is located farther in the X-direction with respect to the second housing 22 than the portion of the second cover 12 overlapping the board 7 is as viewed in the X-direction. The second cover 12 includes a step 12A at the boundary between the portion overlapping the battery pack 5 as viewed in the X-direction and the portion overlapping the board 7 as viewed in the X-direction. The second cover 12 may further include another step different from the step 12A, or may include no step 12A.

The second cover 12 has an opening 12B overlapping the connector 72 as viewed in the X-direction. This allows the user to access the connector 72 easily. The second cover 12 may further include an opening other than the opening 12B, or may include no opening 12B.

As shown in Fig. 3, the second cover 12 includes a curved portion 12C. The curved portion 12C is a portion of the second cover 12 partially curved toward the battery pack 5 in the X-direction. The second cover 12 includes the curved portion 12C recessed toward the battery pack 5 in the X-direction. This recessed portion is a groove 12D. More specifically, the groove 12D is the curved portion 12C. The groove 12D is defined by a surface 12Da of the curved portion 12C facing the main wall 211. More specifically, the groove 12D is defined by the surface 12Da, which is a part of a surface 12E among surfaces of the second cover 12 located opposite to the battery pack 5 in the X-direction. The groove 12D is not limited to the curved portion 12C. For example, the groove 12D may be a thinner portion of the plate-like second cover 12.

As shown in Fig. 2, the groove 12D overlaps the protection circuit 52 as viewed in the X-direction. The groove 12D may partially overlap the protection circuit 52 as viewed in the X-direction.

As shown in Fig. 3, the groove 12D is located between the protection circuit 52 and the main wall 211 in the X-direction.

As shown in Fig. 2, the groove 12D extends across the rectangular battery pack 5. The groove 12D extends parallel to the short sides 5B of the rectangular battery pack 5 (or in other words, extends in the Y-direction) from one long side 5Aa to the other long side 5Ab of the rectangular battery pack 5. In the present embodiment, the groove 12D extends from an edge of the second cover 12 adjacent to the antenna 6 in the Y-direction to the step 12A.

The groove 12D may not be parallel to the short sides 5B of the rectangular battery pack 5. For example, the groove 12D may extend in a direction slightly inclined with respect to (or in other words, substantially parallel to) the short sides 5B of the rectangular battery pack 5. The groove 12D may be, for example, curved rather than straight.

The groove 12D is located opposite to the operation buttons 10 (electronic components) with a center position C of the battery pack 5 in the Z-direction being in between in the Z-direction along a long side 5A of the battery pack 5. In other words, the center position C of the battery pack 5 in the Z-direction is located between the operation buttons 10 and the groove 12D. The groove 12D may be located in the same direction as the operation buttons 10 (electronic components) in the Z-direction with respect to the center position C of the battery pack 5 in the Z-direction.

The wiring route for the cable 8 extending from the antenna 6 to the connector 72 will be described below.

As shown in Fig. 2, the cable 8 includes a first portion 81, a second portion 82, and a third portion 83. The first portion 81 is a portion of the cable 8 between the antenna 6 and the groove 12D. The second portion 82 is a portion of the cable 8 in the groove 12D. The third portion 83 is a portion of the cable 8 between the groove 12D and the controller 71 (the groove 12D and the connector 72 in the present embodiment). The second portion 82 is a part of the cable 8 received in the groove 12D.

The electronic device 1 includes retaining portions 91 and pieces of tape 92 configured to fix a wiring position of the cable 8.

In the present embodiment, each retaining portion 91 is a clip holding the cable 8. The clip is, for example, a bent portion of a frame located in the internal space 2C of the electronic device 1. The retaining portions 91 fix the cable 8 in wiring position in at least one of the first portion 81 or the third portion 83. In the present embodiment, the retaining portions 91 are at positions receiving the first portion 81 of the cable 8 to secure the first portion 81 of the cable 8 in position. The retaining portions 91 may be at positions receiving the second portion 82 of the cable 8 to secure the second portion 82 of the cable 8 in wiring position. The retaining portions 91 may be at positions receiving the third portion 83 of the cable 8 to secure the third portion 83 of the cable 8 in wiring position.

Each piece of the tape 92 is attached to the cable 8 and a portion of the electronic device 1 other than the cable 8 to secure the cable 8 in wiring position. In the present embodiment, the tape 92 secures the second portion 82 of the cable 8 in position. The tape 92 is attached to the second cover 12 across the opening of the groove 12D in the Z-direction. The portion receiving the tape 92 thus has the groove 12D with a covered opening. The tape 92 may be attached to the second portion 82 of the cable 8 received in the groove 12D. As described above, the tape 92 secures the second portion 82 of the cable 8 in wiring position in the groove 12D. The tape 92 may be attached to the first portion 81 of the cable 8 to secure the first portion 81 in wiring position, or may be attached to the third portion 83 of the cable 8 to secure the third portion 83 in wiring position.

As shown in Fig. 3, the groove 12D has a depth D in the X-direction. The depth D is greater than a length R of the second portion 82 of the cable 8 received in the groove 12D in the X-direction (a diameter R of the second portion 82 of the cable 8 in the present embodiment). The depth D may be the same as the length R (or the diameter R). More specifically, the depth D is greater than or equal to the diameter R.

The main wall 211 is spaced from the surface 12E of the second cover 12 by a distance G in the X-direction. The distance G is less than the diameter R of the second portion 82 of the cable 8 received in the groove 12D. The distance G may be greater than or equal to the diameter R.

In the present embodiment, the surface 12Da defining the groove 12D is smoothly curved. More specifically, the surface 12Da in the present embodiment includes no bent portion. The surface 12Da defines the groove 12D is curved, at a deeper portion of the groove 12D, with a curvature that is the same as or substantially the same as the circular cross section of the second portion 82 of the cable 8 that is a coaxial cable. The surface 12Da may include a bent portion.

The second housing 22 includes a rib 221. The rib 221 protrudes toward the second cover 12 in the X-direction from a surface 22B of the second housing 22 facing the second cover 12. The rib 221 extends in the Y-direction. In other words, the rib 221 extends parallel to the groove 12D. The rib 221 is located adjacent to the battery pack 5 in the Z-direction. The rib 221 faces the curved portion 12C of the second cover 12 in the Z-direction and is in contact with the curved portion 12C. The rib 221 may extend in a direction slightly inclined with respect to the groove 12D. More specifically, the rib 221 may extend substantially parallel to the groove 12D.

In the present embodiment, the rib 221 in the second housing 22 formed from a metal is in contact with the second cover 12 that is also formed from a metal and is electrically connected to the ground electrode 74. More specifically, the second housing 22 is electrically connected to the ground electrode 74 with the second cover 12. The second housing 22 may not be electrically connected to the ground electrode 74 with the second cover 12. In this case, the second housing 22 may be electrically connected to the ground electrode 74 with a conductor cable in a similar manner to the second cover 12.

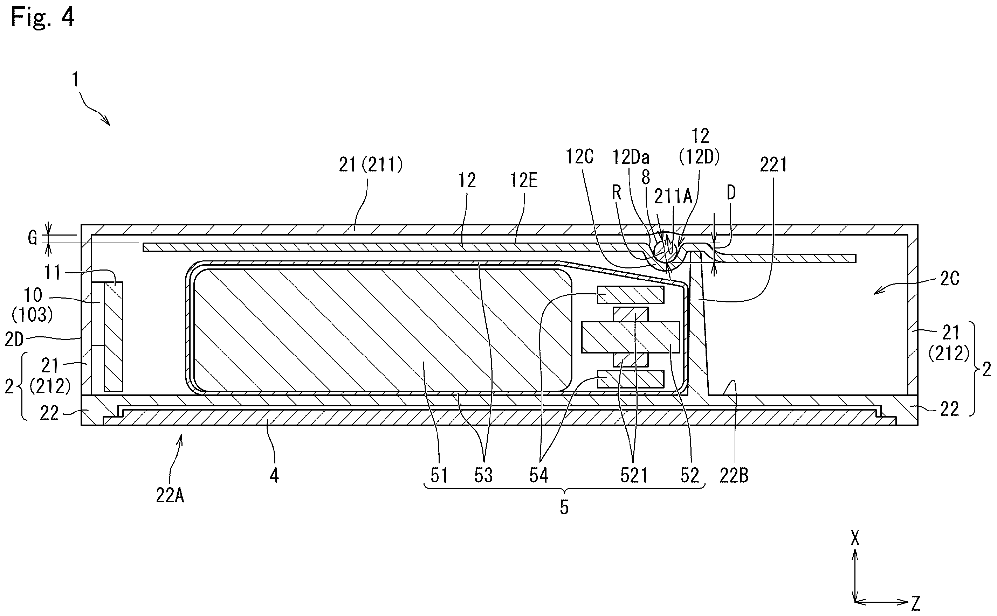

Fig. 4 is a sectional view of an electronic device according to a modification, corresponding to the sectional view taken along line III-III in Fig. 2.

As shown in Fig. 4, the depth D of the groove 12D in the X-direction may be less than the diameter R of the second portion 82 of the cable 8 received in the groove 12D. In this case, the main wall 211 of the first housing 21 facing the groove 12D in the X-direction may have a portion with a recess 211A. In the structure shown in Fig. 4, the depth D of the groove 12D in the X-direction is less than the diameter R of the second portion 82 of the cable 8 received in the groove 12D, and the cable 8 is partially outside the groove 12D. However, the portion of the cable 8 outside the groove 12D may be received in the recess 211A. In this manner, the entire portion of the cable 8 can be received in the groove 12D and the recess 211A. This reduces a size increase in the thickness of the electronic device 1.

### EXPLANATION OF REFERENCES

- 1: electronic device

- 211: main wall (wall)
- 221: rib
- 5: battery pack
- 51: battery
- 52: protection circuit
- 53: first cover
- 5A: long side
- 5B: short side
- 6: antenna
- 71: controller
- 72: connector
- 74: ground electrode
- 8: cable
- 81: first portion
- 82: second portion
- 83: third portion
- 91: retaining portion
- 10: operation button (electronic device)
- 12: second cover
- 12C: curved portion
- 12D: groove
- 12Da: surface
- C: center position
- D: depth of groove in thickness direction
- G: distance
- R: length of cable in thickness direction

## Claims

1. An electronic device, comprising:
an antenna;
a controller configured to control the antenna;
a cable connecting the antenna and the controller;
a battery pack including a battery, a protection circuit electrically connected to the battery, and a first cover covering the battery and the protection circuit; and
a second cover overlapping at least the protection circuit in the battery pack as viewed in a thickness direction of the battery pack,
wherein the protection circuit is shorter than the battery in the thickness direction,
the second cover has, on a surface of the second cover opposite to the battery pack in the thickness direction, a groove recessed in the thickness direction at a position overlapping the protection circuit as viewed in the thickness direction, and
the cable is partially received in the groove.

2. The electronic device according to claim 1, wherein
the second cover overlaps the battery and the protection circuit as viewed in the thickness direction, and comprises a metal.

3. The electronic device according to claim 2, wherein
the second cover is electrically connected to a ground electrode included in the electronic device.

4. The electronic device according to any one of claims 1 to 3, wherein
the groove has a depth in the thickness direction greater than or equal to a length of the cable in the groove in the thickness direction.

5. The electronic device according to any one of claims 1 to 3, wherein
a surface defining the groove is smoothly curved.

6. The electronic device according to claim 5, wherein
the cable is a coaxial cable having a circular cross section, and
the surface defining the groove is curved, at a deeper portion of the groove, with a curvature that is the same as or substantially the same as the circular cross-section of the coaxial cable.

7. The electronic device according to any one of claims 1 to 3, further comprising:
a retaining portion configured to fix a wiring position of the cable,
wherein the cable includes
a first portion located between the antenna and the groove,
a second portion located in the groove, and
a third portion located between the groove and the controller, and wherein
the retaining portion fixes the wiring position of the cable at least one of the first portion or the third portion.

8. The electronic device according to any one of claims 1 to 3, wherein the battery pack is rectangular as viewed in the thickness direction, and the groove extends from one of two long sides of a rectangle of the battery pack to another one of the two long sides.

9. The electronic device according to claim 8, further comprising:
a connector connected to the cable and electrically connected to the controller,
wherein the battery pack is located between the antenna and the connector in a direction along a short side of the rectangle.

10. The electronic device according to claim 8, further comprising:
an electronic component provided alongside the battery pack in a direction along a long side of the rectangle; and
wherein, in the direction along the long side of the rectangle, the groove is located on an opposite side of a central position of the battery pack from the electronic component.

11. The electronic device according to claim 8, wherein
the groove is parallel to or substantially parallel to a short side of the rectangle.

12. The electronic device according to any one of claims 1 to 3, further comprising:
a rib located in a same direction as the battery pack with respect to the second cover in the thickness direction, the rib extending parallel to or substantially parallel to the groove,
wherein the groove is a curved portion of the second cover curved toward the battery pack in the thickness direction, and
the rib faces the curved portion in a direction perpendicular to the thickness direction and a direction in which the rib extends and is in contact with the curved portion.

13. The electronic device according to any one of claims 1 to 3, further comprising:
a wall facing the second cover in the thickness direction and located on a side of the second cover opposite to the battery pack,
wherein a distance, in the thickness direction, between the wall and a portion of the second cover other than the groove is shorter than a length, in the thickness direction, of the cable received in the groove.
